# EUROPÄISCHE PATENTSCHRIFT

(11) **EP 1 159 161 B1**
(45) Veröffentlichungstag und Bekanntmachung des Hinweises auf die Patenterteilung: **17.11.2004**
(21) Anmeldenummer: 00916785.9
(22) Anmeldetag: 01.03.2000
(51) Int. Cl.: B60R 21/00

(54) **VERFAHREN ZUR STEUERUNG DER AUSLÖSUNG EINES KRAFTFAHRZEUG-INSASSENSCHUTZSYSTEMS**
METHOD FOR CONTROLLING THE DEPLOYMENT OF AN OCCUPANT-PROTECTION SYSTEM OF A MOTOR VEHICLE
PROCEDE POUR LA COMMANDE DU DECLENCHEMENT D'UN SYSTEME DE PROTECTION DES OCCUPANTS D'UN VEHICULE AUTOMOBILE

(30) Priorität: 04.03.1999 DE 19909538
(43) Veröffentlichungstag der Anmeldung: 05.12.2001
(73) Patentinhaber: SIEMENS AKTIENGESELLSCHAFT, 80333 München (DE)
(72) Erfinder: LEIRICH, Oskar, D-93073 Neutraubling (DE); FESER, Michael, D-93092 Barbing (DE)
(86) Internationale Anmeldenummer: PCT/DE2000/000606
(87) Internationale Veröffentlichungsnummer: WO 2000/051850

(56) Entgegenhaltungen:
- WO-A-98/54638
- WO-A-99/20491
- US-A- 5 229 943
- US-A- 5 626 359

## Beschreibung

Die Erfindung betrifft ein Verfahren zur Steuerung der Auslösung eines Kraftfahrzeug-Insassenschutzsystems gemäß dem Oberbegriff von Anspruch 1.

Ein derartiges Verfahren ist aus der WO 98/54638 bekannt.

Bekannte Kraftfahrzeug-Insassenschutzsysteme sind mit einem oder mehreren Aufprallsensoren versehen, deren Ausgangssignale zur Erkennung eines sicherheitskritischen Unfalls ausgewertet werden. Aufgrund der Vielzahl möglicher Unfallarten bereitet die zuverlässige Auswertung der Beschleunigungssignale großen Aufwand. Dieser Aufwand erhöht sich noch weiter, wenn mehrstufig zündende Insassenschutzkomponenten, beispielsweise ein mehrstufiger Airbag (mit zwei oder mehr nacheinander abhängig von der Schwere des Unfalls zu zündenden Zündpillen), zeitrichtig anzusteuern sind. Dies erfordert auch hohe, normalerweise nicht mit vertretbarem Aufwand zur Verfügung stellbare Hardwareanforderungen hinsichtlich der Rechenleistung des eingesetzten Mikrokontrollers oder Mikroprozessors.

Zudem ist es schwierig, die erforderlichen schnellen Zündzeiten der passiven Rückhaltesysteme zu gewährleisten, d.h. die Auswertungsberechnungen innerhalb eines sehr kurzen Zeitintervalls abzuschließen. Ferner werden zur Verbesserung des Insassenschutzsystems sowohl seitens der Gesetzgebung als auch der Fahrzeughersteller neue Testsituationen für frontale Aufpralle definiert, die die Auslösung eines passiven Rückhaltesystems erfordern. Derzeit übliche Testsituationen für frontale Aufpralle sind ein Frontalaufprall auf eine starre Wand, ein Aufprall auf ein starres Hindernis mit Teilüberdekkung (Offset-Test) oder in einem spitzen Winkel (Winkeltest) sowie ein Aufprall auf ein deformierbares Hindernis mit Teilüberdeckung, d.h. ein ODB-Test (offset deformable barrier).

Der Erfindung liegt die Aufgabe zugrunde, ein Verfahren zur Steuerung der Auslösung eines Kraftfahrzeug-Insassenschutzsystems zu schaffen, das sich durch gute Insassenschutzfunktion auszeichnet.

Diese Aufgabe wird mit den im Patentanspruch 1 genannten Merkmalen gelöst.

Vorteilhafte Ausgestaltungen der Erfindung sind in den Unteransprüchen angegeben.

Bei dem Verfahren ist vorgesehen, bei einem Unfall zusätzlich die Unfallart, beispielsweise Frontalaufprall auf eine starre Wand oder Schrägaufprall oder Aufprall auf ein deformierbares Hindernis, zu erfassen. Die Berücksichtigung des Unfalltyps ermöglicht es, die für die Auslöseentscheidung intern gebildeten Signale in zusätzlicher Abhängigkeit vom Unfalltyp festzulegen und damit eine noch besser an das jeweilige Unfallgeschehen angepaßte Auslösesteuerung zu erreichen.

Der Auslösealgorithmus wird somit abhängig vom erkannten Unfalltyp angepaßt. Dies kann in unterschiedlicher Weise erfolgen. Im Steuergerät können unterschiedliche Auslösealgorithmen vorgesehen sein, die für die einzelnen Aufpralltypen optimiert sind. Abhängig vom erkannten Aufpralltyp wird dann der hierfür vorgesehene Auslösealgorithmus aufgerufen und abgearbeitet. Diese Auslösealgorithmen können an sich bekannte Struktur aufweisen. Beispielsweise kann für den Typ "Frontalaufprall auf ein starres Hindernis", bei dem eine sehr starke Beschleunigung zu verzeichnen ist, einfach das Beschleunigungssignal oder eine hiervon abgeleitete Größe mit einem hohen Schwellwert verglichen werden. Bei dem Aufpralltyp "Frontalaufprall auf ein deformierbares Hindernis" kann das Beschleunigungssignal oder eine hiervon abgeleitete Größe mit einer niedrigeren Schwelle verglichen werden und zusätzlich noch die Zeitdauer berücksichtigt werden, wie lange das Beschleunigungssignal einen bestimmten Wert überschreitet.

In bevorzugter Ausgestaltung ist aber nur ein einziger Auslösealgorithmus vorgesehen, der im Steuergerät gespeichert ist und dessen Parameter, beispielsweise die Höhe von Schwellwerten, abhängig vom erkannten Aufpralltyp modifiziert werden. Dies verringert den Speicherplatzbedarf und erlaubt es, mit der Abarbeitung des Auslösealgorithmus sofort bei Erkennen eines beginnenden Aufpralls zu starten, auch wenn die Unfalltyperkennung noch nicht abgeschlossen ist.

In bevorzugter Ausgestaltung wird das von dem zentralen Beschleunigungssensor, der in der Regel im zentralen, normalerweise vorne im Tunnelbereich angeordneten Steuergerät angebracht ist, abgegebene Beschleunigungssignal in zweifacher Hinsicht ausgenutzt und ausgewertet, nämlich einerseits zur Unfalltyperkennung und andererseits als das vom Auslösealgorithmus auszuwertende Beschleunigungssignal. Damit ist kein zusätzlicher ausgelagerter Sensor erforderlich. Sofern jedoch ein oder mehrere zusätzliche ausgelagerte Sensoren vorhanden sein sollten, kann deren Ausgangssignal zusätzlich (oder ausschließlich) zur Unfalltyperkennung und/oder bei der Abarbeitung des Auslösealgorithmus ausgewertet werden.

Sofern aus den Sensorsignalverläufen nicht eindeutig auf eine bestimmte Unfallart geschlossen werden kann, wird vorzugsweise ein Zugehörigkeitswert, insbesondere ein Wahrscheinlichkeitswert (Likelihood-Wert) gebildet, der die Wahrscheinlichkeit widerspiegelt, mit der ein Unfall zu einem bestimmten Unfalltyp gehört. Bei solcher nicht eindeutiger Zuordnung können sich auch mehrere Wahrscheinlichkeitswerte ergeben, beispielsweise 80 % für "Frontalaufprall (0°) auf starres Hindernis" und 20 % für "winkliger Frontalaufprall auf starres Hindernis". Solche "Fuzzy"-Werte können zur "Fuzzy"-Beeinflussung des Auslösealgorithmus, beispielsweise zur Bildung von Gewichtungsfaktoren für die Bewertung einzelner, bei der Abarbeitung des Auslösealgorithmus gebildeter und/oder ausgewerteter Größen herangezogen werden. Die Gewichtungsfaktoren können beispielsweise auf Zwischenwerte zwischen den für die einzelnen Unfallarten vorgegebenen Gewichtungswerten in Abhängigkeit von den Wahrscheinlichkeitswerten eingestellt werden.

Die Erfindung ist auch bei der Zündung zwei- oder mehrstufig zündbarer Insassenschutzsysteme, beispielsweise zweistufiger Airbags, vorteilhaft einsetzbar. Die erkannte Unfallart bzw. der oder die ermittelten Zugehörigkeitswerte können dann nicht nur bei dem für die erste Zündstufe vorgesehenen Auslösealgorithmusabschnitt, sondern auch bei dem Auslösealgorithmusabschnitt für die zweite Stufe verarbeitet werden, so daß eine doppelte Ausnutzung der erfaßten Unfallart und eine zuverlässige Auslösesteuerung bei vertretbarem Rechenaufwand und in ausreichend kurzer Zeit gewährleistet ist.

In vorteilhafter Weise ist der Auslösealgorithmus modulartig aufgebaut, wobei ein Modul die Unfallarterkennung bewirkt, während ein weiteres Modul die Bildung von Vergleichswerten für den Vergleich mit der aktuellen Beschleunigung oder einer hiervon abhängigen Größe bewirkt und ein drittes Modul den Vergleich zwischen diesen Größen durchführt. Dies erlaubt die Verwendung bereits erprobter Auslösealgorithmen im zweiten und dritten Modul, die lediglich durch das erste Modul noch zusätzlich beeinflußt werden. Zugleich kann auch eine einfache und separate Parametrierung der Module in Anpassung an unterschiedliche Kraftfahrzeugtypen, Plattformen und dergleichen erfolgen.

Die Erfindung erlaubt nicht nur die grobe Klassifizierung von allgemeinen Unfalltypen wie Frontaufprall, Seitenkollision oder Heckaufprall, sondern zeichnet sich insbesondere durch die Möglichkeit aus, innerhalb eines Unfalltyps noch eine Feinklassifizierung vorzunehmen, nämlich zum Beispiel beim Typ "Frontaufprall" feiner zu unterscheiden zwischen "Frontalaufprall (Winkel 0°) auf starres Hindernis", "Frontalaufprall auf weiches Hindernis (gegebenenfalls mit Teilüberdekkung)", "Frontalaufprall mit Teilüberdeckung auf starres Hindernis" oder "Winkelaufprall", und gegebenenfalls die Wahrscheinlichkeit der Zugehörigkeit des vorliegenden Aufpralls zu den in Frage kommenden Unterklassen zu ermitteln.

Der unfalltypabhängig beeinflußte Auslösealgorithmus kann entweder ein einfach aufgebauter Algorithmus sein, bei dem die aktuell erfaßte, gegebenenfalls einer Vorverarbeitung unterzogene Beschleunigung mit einem Schwellwert verglichen wird, oder kann auch ein ausgereifterer Algorithmus sein, bei dem aus den Beschleunigungssensorsignalen abgeleitete Größen ermittelt und Terme gebildet werden, die bestimmte Charakteristika wie etwa die Vorhersage der Kopflagerung oder dergleichen repräsentieren, und bei der Festlegung der für den Auslösevergleich berücksichtigten Größen, beispielsweise der Schwellwerte, herangezogen werden.

Die Erfindung wird nachstehend anhand eines als Airbag- und Gurtstrammersystem ausgebildeten Insassenschutzsystems unter Bezugnahme auf die Zeichnungen näher beschrieben. Selbstverständlich ist die Erfindung aber auch bei anders ausgestalteten Insassenschutzsystemen einsetzbar.
- Fig. 1: zeigt ein Blockschaltbild eines modulartig aufgebauten Auslösealgorithmus,
- Fig. 2: zeigt Einzelheiten der Unfallarterkennung,
- Fig. 3: zeigt schematisch die Beeinflussung von Gewichtungsfaktoren des Auslösealgorithmus, und
- Fig. 4: zeigt die Verläufe eines beschleunigungsabhängigen Signals und von für die Zündentscheidung gebildeten Schwellen.

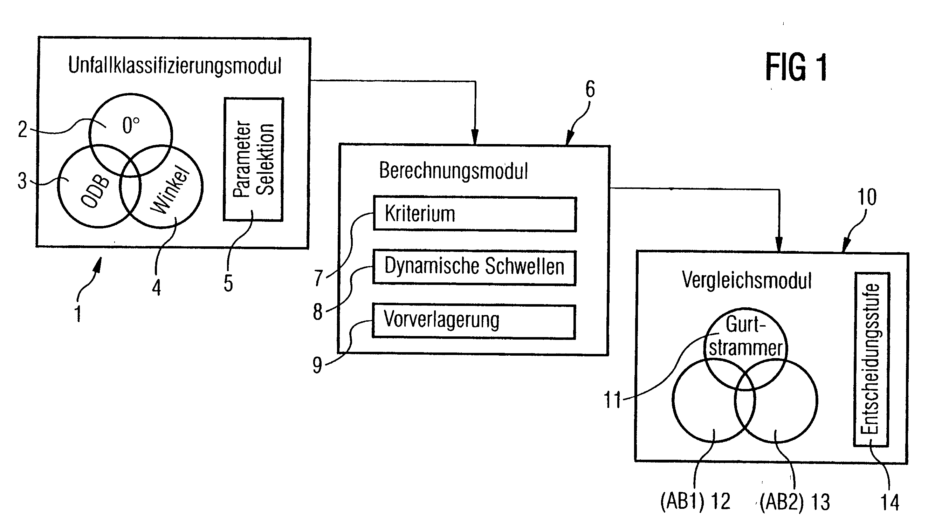

In den Zeichnungen sind das Insassenschutzsystem und das zentrale, den Auslösealgorithmus abarbeitende Steuergerät nicht dargestellt. Diese Komponenten können herkömmlichen Aufbau aufweisen. Der erfindungsgemäße Auslösealgorithmus ist gemäß der Darstellung in Fig. 1 vorzugsweise modulartig aufgebaut und umfaßt ein Klassifizierungsmodul 1, ein Berechnungsmodul 6 und ein Vergleichsmodul 10. Das Klassifizierungsmodul 1 ist hier zur Feinklassifizierung der Unfallart bei einem Frontalaufprall, nämlich zur Unterscheidung zwischen einem Frontalaufprall auf eine starre Wand mit Vollüberdeckung, einem Frontalaufprall auf eine starre Wand mit Teilüberdeckung, einem winkligen Frontalaufprall auf ein starres Hindernis und einem Frontalaufprall mit Teilüberdeckung auf ein deformierbares Hindernis, ausgelegt. Eine solche Feinklassifizierung kann auch für andere Aufprallarten, beispielsweise eine Seitenkollision vorgesehen sein. Bei diesen unterschiedlichen Aufprallarten ergibt sich jeweils ein charakteristischer Verlauf der gemessenen Beschleunigung. Ein Frontalaufprall auf eine starre Wand bei niedriger Geschwindigkeit, bei der keine Auslösung gerechtfertigt ist, führt z.B. zu einer höheren Beschleunigungsamplitude als ein Aufprall auf eine deformierbare Barriere (ODB) bei hoher Geschwindigkeit, bei der eine Auslösung sinnvoll ist. Auch die mechanischen Eigenschaften der jeweiligen Kraftfahrzeug-Plattform haben großen Einfluß auf das im zentralen Steuergerät gemessene Beschleunigungssignal, können jedoch für einen jeweiligen Kraftfahrzeugtyp durch entsprechende Parameterabstimmung kompensiert werden.

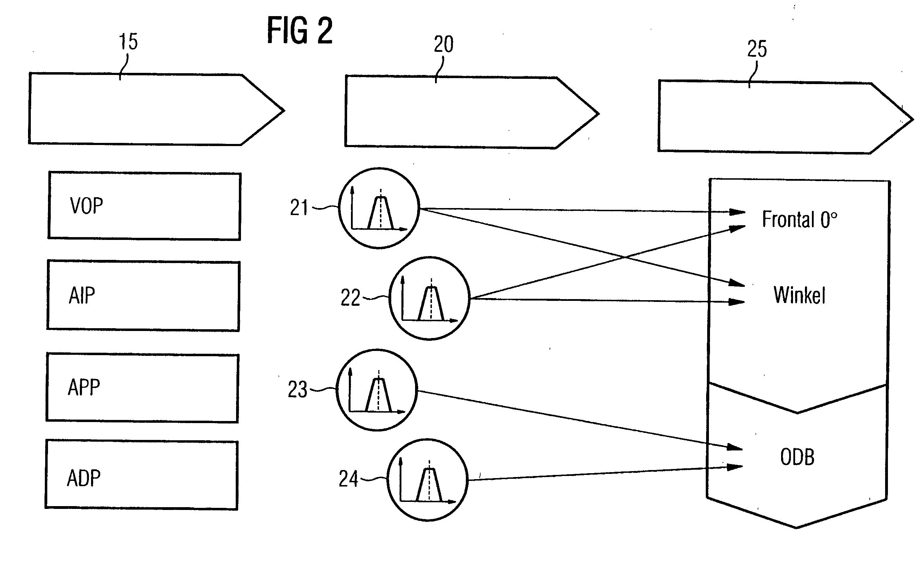

Im Klassifizierungsmodul 1 werden aus den vorhandenen Beschleunigungssignalen, regelmäßig den im zentralen Steuergerät erzeugten Beschleunigungssignalen in longitudinaler Richtung und gegebenenfalls auch in lateraler Richtung Merkmale gemäß definierten Rechenvorschriften gebildet, die anhand Fig. 2 noch näher erläutert werden. Sofern zusätzliche Sensoren, beispielsweise Unfallfrüherkennungssensoren im Kraftfahrzeug-Frontbereich, vorhanden sein sollten, können auch deren Ausgangssignale zur Merkmalsgewinnung ausgewertet werden. Anhand der gewonnenen Merkmale läßt sich mittels einer vorzugsweise parametrierbaren Kombination derselben eine Klassifizierung der aktuellen Frontalaufprallsituation, nämlich eine Unterscheidung zwischen einem Frontalaufprall 2 (Winkel 0°) auf eine starre Wand, einem Aufprall 4 unter einem bestimmten Winkel oder einem Aufprall 3 gegen eine deformierbare Barriere (ODB-Crash), erreichen. Das Klassifizierungsmodul 1 bewirkt bei nicht eindeutiger Klassifizierbarkeit vorzugsweise keine feste "ja/nein"-Entscheidung bezüglich der einzelnen Unfalltypen, sondern berechnet Wahrscheinlichkeits- oder Zugehörigkeitswerte für die unterschiedlichen klassifizierbaren Unfalltypen. Dies ist in Fig. 1 durch die Überschneidung zwischen den Aufpralltypen 2, 3, und 4 symbolisiert.

Das Berechnungsmodul 6 berechnet aus der im zentralen Steuergerät gemessenen Beschleunigung einen im folgenden als Kriterium 7 bezeichneten Wert, der im Vergleichsmodul 10 mit einer oder mehreren, ebenfalls im Berechnungsmodul 6 berechneten zeitlich veränderlichen, d.h. dynamischen Schwellen 8 dient. Die Berechnung der dynamischen Schwelle(n) kann gemäß einem bekannten Auslösealgorithmus erfolgen, wobei als zusätzliche Einflußgröße der erfaßte Unfalltyp berücksichtigt werden kann. Ebenso kann das Kriterium zum Beispiel durch Tiefpaßfilterung und gegebenenfalls gleitender Mittelwertbildung-der gemessenen Beschleunigung berechnet werden, wobei die bei der Berechnung erforderlichen Parameter während der Algorithmuskalibrierung abhängig von den Fahrzeugtypeigenschaften einstellbar sind. Bei der Berechnung des Kriteriums 7 oder der Schwelle(n) 8 können noch zusätzlich Gewichtungsfaktoren berücksichtigt werden, die in Abhängigkeit von der vom Klassifizierungsmodul 1 erkannten Aufprallsituation kalibriert werden. Die Skalierung ist hierbei für jede Aufprallsituation und jeden Gewichtungsfaktor getrennt möglich. Im Berechnungsmodul 6 wird neben der Berechnung des Kriteriums 7 und der dynamischen Schwelle(n) 8 auch die durch den Aufprall hervorgerufene Kopfverlagerung 9 des Fahrers oder Passagiers vorausberechnet, die jeweils nach Verstreichen der Airbag-Aufblaszeiten zu erwarten ist.

Im Vergleichsmodul 10 wird das Kriterium 7 mit der oder den dynamischen Schwellen 8 verglichen und in einer Entscheidungsstufe 14 entschieden, ob ein Gurtstrammersystem 11, die erste Stufe 12 eines zweistufig zündbaren Airbags und/oder die zweite Stufe 13 dieses Airbags zu zünden sind.

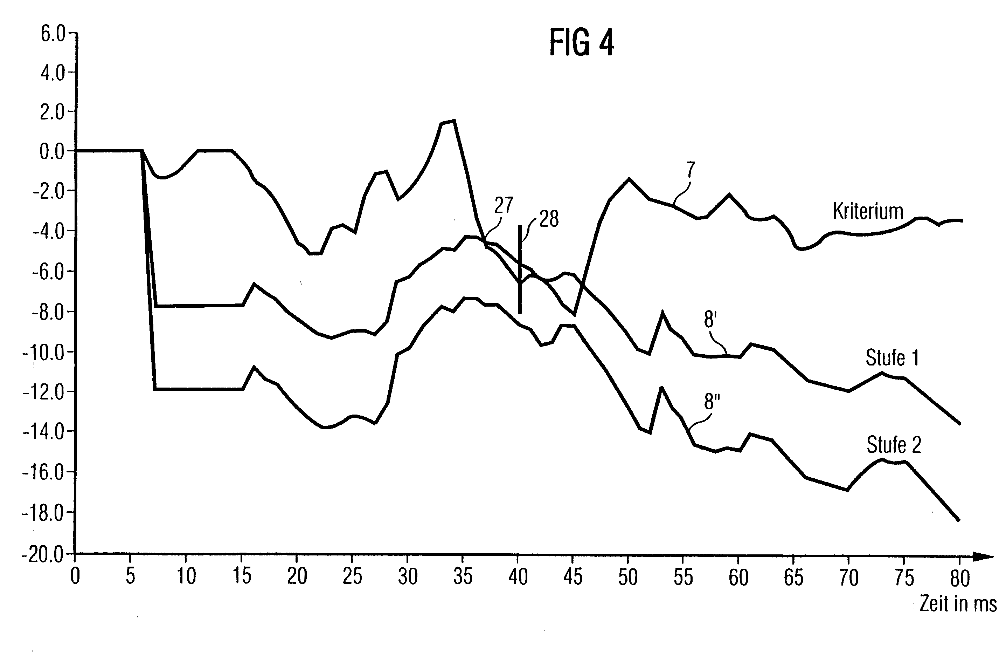

In Fig. 4 ist ein Beispiel für die zeitlichen Verläufe des Kriteriums 7 und der dynamischen Schwellen 8', 8" bei einem Frontalaufprall dargestellt. Wenn eine nur einstufig zündbare Insassenschutzkomponente zu steuern ist, wird lediglich eine Schwelle 8' berechnet. Wie aus Fig. 4 ersichtlich ist, verändern sich die Schwellen 8', 8" dynamisch in Abhängigkeit vom Beschleunigungsverlauf. Zu einem Zeitpunkt 27 unterschreitet das Kriterium 7 die Schwelle 8'. Zu einem Zeitpunkt 28 erfolgt dann die Zündung der ersten Stufe der Insassenschutzkomponente. Die zweite Stufe wird bei dem gezeigten Beispiel nicht gezündet, da die_Schwelle 8" nicht unterschritten wird.

Allgemein kann die Auslöseentscheidung zur Zündung der zweiten Stufe des Gasgenerators der Insassenschutzkomponente in unterschiedlicher Weise getroffen werden. Entweder wird, wie in Fig. 4 gezeigt ist, das Kriterium 7 mit der dynamischen Schwelle 8" verglichen, die analog zu der zur Auslösung-der ersten Stufe berechneten Schwelle 8' ermittelt wird, wobei die dynamische Schwelle 8" jedoch mit eigens hierfür kalibrierten Parametern berechnet wird. Durch logische Verknüpfung wird hierbei sichergestellt, daß die zweite Stufe erst nach einer Auslösung der ersten Stufe, gegebenenfalls erst nach einer einstellbaren, von der verwendeten Generatorarchitektur abhängigen einstellbaren Verzögerungszeit aktiviert werden kann. Alternativ kann für die Zündung der zweiten Stufe ein separater Algorithmus vorgegeben werden, der ausschließlich auf die Analyse der Unfallschwere hin optimiert ist. Die Berechnung dieses Algorithmus kann beispielsweise erst mit der Zündung der ersten Stufe gestartet werden, wobei die Klassifizierungsergebnisse des Klassifizierungsmoduls 1 in diesen Algorithmus und damit in die Berechnung der Schwelle 8" zur Auslösung der zweiten Stufe einfließen. Alternativ kann mit der Berechnung des separaten Algorithmus für die zweite Stufe auch schon vor der Zündung der ersten Stufe begonnen werden, sofern nur zur diesem Zeitpunkt vorhandene Informationen für diesen Algorithmus erforderlich sein sollten.

Im folgenden wird die Arbeitsweise des Klassifizierungsmoduls 1 anhand der Fign. 1, 2 und 3 näher erläutert. Wie in Fig. 1 gezeigt ist, kann das Klassifizierungsmodul 1 zwischen den Aufprallarten 2, 3 und 4 unterscheiden und bewirkt bei einem Schritt 5 die Auswahl oder Einstellung von Parametern wie etwa von Gewichtungsfaktoren, die im Berechnungsmodul 6 verwendet werden. Im Klassifizierungsmodul 1 werden zunächst gemäß Fig. 2 in einem ersten Berechnungsabschnitt 15 unfallcharakterisierende Merkmale 16 bis 19 ermittelt, bei denen es sich um die aufintegrierte gemessene Beschleunigung, d.h. um die tatsächliche Geschwindigkeitsänderung, abzüglich eines Offsetwerts (Merkmal 16); um eine Winkelintegration (Merkmal 17), bei der eine erfaßte Winkelbeschleunigung einfach oder zweifach integriert wird, um eine Winkeländerung des Kraftfahrzeugs gegenüber der Longitudinalrichtung zu erfassen; um die Überprüfung des Vorhandenseins eines plateauförmigen Verlaufs im Beschleunigungssignal (Merkmal 18), der für einen Aufprall auf ein deformierbares Hindernis charakteristisch sein kann; und/oder um eine Überprüfung der dynamischen Änderungen des Beschleunigungssignals (Merkmal 19) handelt. Im ersten Berechnungsabschnitt 15 müssen nicht alle Merkmale 16 bis 19 jeweils parallel überprüft werden. Gegebenenfalls können aber auch noch weitere charakteristische Merkmale überprüft und ausgewertet werden.

Im zweiten Berechnungsabschnitt 20 werden die im ersten Berechnungsabschnitt 15 ermittelten Größen (Werte der Merkmale 16 bis 19) hinsichtlich ihrer aktuellen Größe mit den in den Darstellungen 21 bis 24 schematisch gezeigten Bewertungskurven bewertet, bei denen auf der horizontalen Achse jeweils der ermittelten Größe des zugehörigen Merkmals zugeordnet ist und auf der vertikalen Achse der beispielsweise zwischen 0 und 1 variable Ausgabewert dargestellt ist. Der für einen bestimmten Unfalltyp besonders charakteristische Wert ist in den Schaubildern 21 bis 24 jeweils mit einer gestrichelten Linie dargestellt. Sofern das Merkmal diese Größe oder eine hiervon nur geringfügig abweichende Größe aufweisen sollte, wird der maximale Ausgabewert, beispielsweise "1" abgegeben. Wenn die Größe des Merkmals weit außerhalb liegen sollte, wird als Ausgabewert "0" abgegeben. Die Bewertung zeichnet sich hierbei durch schräge Übergänge aus, so daß Merkmalsgrößenwerte, die wieder eindeutig bei dem zentralen Wert noch weit außerhalb hiervon liegen, mit Zwischenwerten als Ausgabewerten bewertet werden, die zwischen dem Maximal- und dem Minimalwert, beispielsweise "1" und "0" variieren können, und je nach Abstand vom zentralen Wert beispielsweise den Wert 0,9, 0,7, 0,1 oder einen zwischenliegenden Wert aufweisen können. Im zweiten Berechnungsabschnitt 20 werden die bei der Bewertung mittels der Kurven 21 bis 24 erhaltenen Ausgabewerte dann zur Ermittlung-des Unfalltyps, bzw. bei nicht eindeutig klassifizierbaren Unfalltyp zur Ermittlung der Wahrscheinlichkeit eines jeweiligen Unfalltyps, in der dargestellten Weise kombiniert. Wenn beispielsweise der von der Bewertungskurve 21 erhaltene Ausgabewert nicht signifikant einen Frontalaufprall signalisiert, jedoch einen deutlich über Null liegenden Wert aufweist, und auch der mittels der Bewertungskurve 22 erhaltene Ausgabewert nicht klar einen Winkelaufprall signalisiert, sondern einen zwischen dem Minimal- und Maximalwert liegenden Wert besitzt, wird durch Verrechnung der beiden Ausgabewerte auf die Wahrscheinlichkeiten geschlossen, mit denen es sich um einen Frontalaufprall oder einen Winkelaufprall auf ein starres Hindernis handeln kann. Ebenso wird anhand der mit Bewertungskurven 23 und 24 erhaltenen Ausgabewerten ermittelt, ob und mit welcher Wahrscheinlichkeit es sich um einen ODB-Crash handelt.

In dem dritten Berechnungsabschnitt 25 werden für die einzelnen Aufprallarten 2, 3 und 4 die jeweiligen Zugehörigkeitswerte, d.h. die Wahrscheinlichkeitswerte, festgelegt, oder, bei bereits vollständiger Bildung im zweiten Berechnungsabschnitt 20, als Ausgangsgrößen gegeben. Beispielsweise kann das ausgegebene Ergebnis lauten: "70 % Wahrscheinlichkeit für Frontalaufprall 0°" und "30 % Wahrscheinlichkeit für Winkelaufprall".

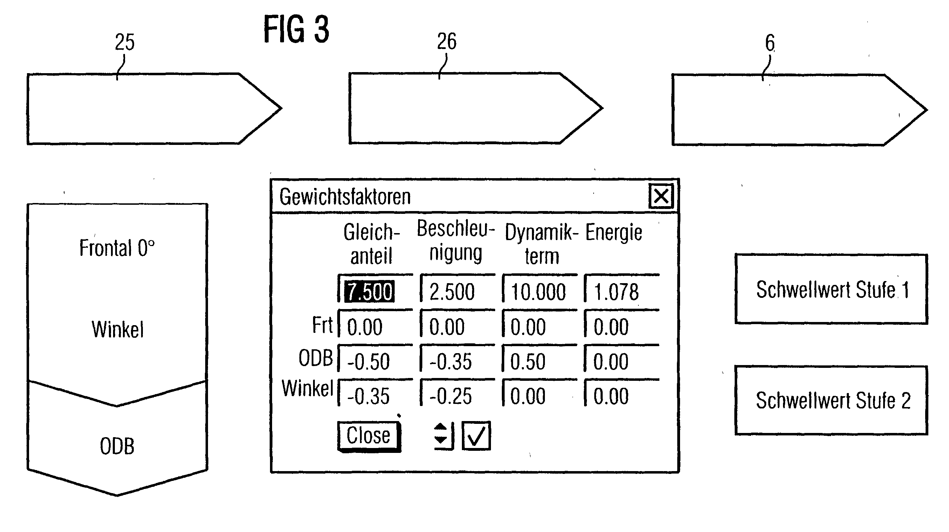

In Fig. 3 ist der Übergangsbereich zwischen dem Klassifizierungsmodul 1 und dem Berechnungsmodul 6 dargestellt, wobei in Fig. 3 der Berechnungsabschnitt 25 nochmals dargestellt ist. An den dritten Berechnungsabschnitt 25 schließt sich ein vierter Berechnungsabschnitt 26 des Klassifizierungsmoduls 1 an, bei dem die Größe von Gewichtungsfaktoren in Abhängigkeit vom erkannten Unfalltyp bzw. den Wahrscheinlichkeitswerten festgelegt werden. In der im Berechnungsabschnitt 26 dargestellten Tabelle sind einzelne Parameter aufgelistet, die zur Berechnung interner Größen dienen, anhand derer dann durch Kombination eine Schwelle, beispielsweise die Schwelle 8', festgelegt wird. In der gezeigten Tabelle sind in den einzelnen Spalten von links nach rechts die folgenden Parameter aufgelistet: "Gleichanteil" (z.B. Schwellwert, bei dessen Überschreiten immer zu zünden ist), gemittelte Beschleunigung, Dynamikterm (charakterisiert den dynamischen Verlauf der Beschleunigung), und "Energie". Es können auch andere oder weitere Parameter vorgesehen sein. In der ersten Zahlenreihe sind die für die einzelnen Parameter voreingestellten Zahlenwerte angegeben. Die darunterliegende Zeile ist für die Typerkennung "reiner Frontalaufprall 0 % auf starres Hindernis" vorgesehen und gibt an, um wieviel Prozent die Vorgabewerte zu verändern sind. Da bei dem gezeigten Beispiel die Vorgabewerte für Frontalaufprall optimiert sind, findet in diesem Fall keine Verringerung statt, so daß die Gewichtsfaktoren für die Verringerung jeweils 0,00 sind. In der darunterliegenden Zeile sind die Gewichtungsfaktoren für erkannten reinen ODB-Crash vorgesehen, bei dem beispielsweise der Gleichanteil, d.h. die maximale Schwelle, um 50 % (- 0,50) verringert, d.h. auf 3.750 abgesenkt wird. Dies trägt dem Sachverhalt Rechnung, daß bei Aufprall auf weiches Hindernis die maximal auftretende Beschleunigung deutlich niedriger ist als bei Frontalaufprall auf ein starres Hindernis.

In der untersten Zeile der Tabelle des Berechnungsabschnitts 26 sind die Gewichtungsfaktoren für erkannten reinen Winkelaufprall dargestellt. In diesem Fall wird beispielsweise der Gleichanteil um 35 % verringert (- 0,35). Sofern sich bei der Crasherkennung aber keine hundertprozentige Zuordnung zu einem bestimmten Unfalltyp ermittelt wurde, sondern wie bei dem vorigen Beispiel nur eine siebzigprozentige Wahrscheinlichkeit für einen Frontalaufprall auf starres Hindernis und eine dreißigprozentige Wahrscheinlichkeit für einen Winkelaufprall ergeben hat, werden die für diese Unfalltypen jeweils vorgesehenen Gewichtungswerte im entsprechenden Verhältnis verrechnet und ein Zwischenwert für den Gewichtungsfaktor gebildet. Bei diesem Beispiel ergibt sich als neuer Gewichtungsfaktor (70 % · 0,00 + 0 % · -0,5 + 30 % · -0,35 = -0,105). Der Gleichanteil wird daher um 10,5 % gegenüber dem Vorgabewert von 7.500 herabgesetzt. Auch für die weiteren Parameter wird entsprechend ein_Gewichtungsfaktor gebildet, der entsprechend dem Wahrscheinlichkeitsverhältnis gemittelt zwischen den in der Tabelle jeweils angegebenen Gewichtungsfaktoren liegt. Bei anderen Wahrscheinlichkeitsverhältnissen für die einzelnen Unfalltypen werden die Gewichtungsfaktoren entsprechend dem sich dann ergebenden Wahrscheinlichkeitsverhältnis analog zum vorstehend angegebenen Beispiel modifiziert.

Hierdurch ergibt sich gewissermaßen eine "Fuzzy"-Verarbeitung, da nicht nur mit festen logischen Werten "0" und "1", sondern auch mit gegebenenfalls stufenlos variablen Zwischenwerten gearbeitet werden kann.

Das Klassifizierungsmodul 1 liefert somit als Ergebnis der Unfallanalyse den Wahrscheinlichkeitsgrad der Zugehörigkeit des aktuellen Unfalls zu einer entsprechenden Aufprallart, und/oder stellt die entsprechenden Gewichtungsfaktoren ein, je nach dem, ob letztere Funktion noch im Klassifizierungsmodul 1 oder schon im Berechnungsmodul 6 ausgeführt wird. Damit erfolgt keine harte Einordnung eines Aufpralls in eine der möglichen Aufprallarten, sondern es wird vielmehr eine Wahrscheinlichkeit angegeben, um welche Aufprallart oder -arten es sich handeln kann, da Überschneidungen möglich sind (ein ODB-Tests zeigt z.B. eine Analogie zum Winkelaufprall). Im Klassifizierungsmodul 1 werden entsprechende Programmrechenschritte zur Bildung der anhand des ersten Berechnungsabschnitts 15 erläuterten Merkmale 16 bis 19 und gegebenenfalls weiterer Merkmale ausgeführt, die dann, wie erläutert, kombiniert und "fuzzifiert", d.h. mit Wahrscheinlichkeitswerten verknüpft werden.

Da unterschiedliche Kraftfahrzeug-Plattformen gewisse Ähnlichkeiten bezüglich der Kurvenform des Beschleunigungsverlaufs bei den angegebenen Aufprallversuchen zeigen, kann auch eine Grundkalibrierung vorgesehen werden, die je nach aktuellem Plattformtyp dann nur noch geringfügig und teilweise angepaßt werden muß, beispielsweise durch Änderung der in Fig. 3 gezeigten Vorgabewerte und/oder Gewichtungsfaktoren der einzelnen Aufprallarten.

Die Ergebnisse der Aufprallklassifizierung durch das Klassifizierungsmodul 1 lassen sich bei allen weiteren Modulen 6, 10 und gegebenenfalls weiteren Modulen sowie bei den Schwellenberechnungen gemeinsam anwenden. Beispielsweise werden die Schwellenberechnungen für einen angegurteten Insassen, einen nicht angegurteten Insassen sowie gegebenenfalls die Entscheidung über die Schwere des Aufpralls, die zur Zündung einer weiteren Stufe führt, auf der Basis der Ergebnisse des Klassifizierungsmoduls 1 ausgeführt. Für diesen Modulabschnitt, der die Entscheidung über die Aufprallschwere trifft, sind somit keine unterschiedlichen Parameter für die Berechnung erforderlich. Damit ist auch die Ansteuerung von mehrstufigen Rückhaltemitteln erleichtert und der hierfür erforderliche Rechen- und Zeitaufwand reduziert. Somit ist eine zeitrichtige Entscheidung bei vertretbaren Hardwareanforderungen gewährleistet.

Die Analyse und Klassifizierung der Aufprallart stellt eine grundsätzliche allgemeine Größe dar, die dann als Basis für die weiteren Berechnungen für die Entscheidung "Zünden/Nichtzünden" sowie für die Analyse der Aufprallschwere dient.

Hierbei können die Informationen von eventuell zusätzlichen am Kraftfahrzeug angebrachten Unfallsensoren, z.B. "early Crash"-Sensoren im Frontbereich, in einfacher Weise in das bestehende System integriert werden. Die Auslöseentscheidung läßt sich dabei wahlweise in Abhängigkeit von den von solchen zusätzlichen Sensoren stammenden, eventuell einer integrierten Signalvorverarbeitung unterzogenen Informationen oder anhand von speziell für den Fall eines einzigen zentralen Beschleunigungssensors im Zentralgerät angepaßten Parametern, die im Zentralgerät berechnet werden, treffen. Die Art der Bildung der Auslöseschwellen, beispielsweise der Schwellen 8' und 8" auf der Grundlage der jeweiligen Sensoren und deren Beschleunigungssignalen ist dabei einfach und flexibel parametrierbar. Diese leichte Parametrierbarkeit und Kalibrierung ist auch ein Vorteil der Auftrennung in Klassifizierungsmodul 1 und Berechnungsmodul 6, da diese Algorithmenmodule dann jeweils weitestgehend unabhängig voneinander kalibrierbar sind. Hierbei ist die Anzahl der für ein jeweiliges Modul einstellbaren Parameter relativ gering und übersichtlich. Da ferner keine Rückkopplungen und Wechselwirkungen bei der jeweiligen Parametereinstellung in einem Modul auf das andere Modul vorhanden sind, ist die Parametrisierung sehr einfach und zuverlässig ausführbar. Die modulare Architektur des Auslösealgorithmus ermöglicht ferner eine effiziente und der jeweiligen Applikation angepaßte hardwaremäßige Implementierung.

## Patentansprüche

1. Verfahren zur Steuerung der Auslösung einer oder mehrerer Insassenschutzkomponenten eines Kraftfahrzeug-Insassenschutzsystems bei einem Aufprall, mit einem oder mehreren Unfallsensoren und einem die Ausgangssignale des oder der Unfallsensoren gemäß einem Auslösealgorithmus auswertenden Steuergerät zum Zünden der Insassenschutzkomponente(n),
**dadurch gekennzeichnet, dass**
• in einem ersten Schritt von einem Aufprallart-Klassifizierungsäbschnitt (1) des Auslösealgorithmus aus dem oder den Ausgangssignal(en) des oder der Unfallsensoren Zugehörigkeitswerte , die die Wahrscheinlichkeit der Zugehöngkeit zu einem Aufprallart angeben, zu zumindest zwei Aufprallarten gebildet werden, wobei die Zugehörigkeitswerte in Abhängigkeit von der Genauigkeit der Klassifizierung des aktuellen Aufpralls in eine jeweilige Aufprallart variabel sind,
• in einem zweiten Schritt Parameter des Auslösealgorithmus wie ein von der erfassten aktuellen Beschleunigung abhängiges Kriterium (7) und/oder Schwellen (8', 8") mit denen das Kriterium verglichen werden kann und/oder der Auslösealgorithmus abhängig von den gebildeten Zugehörigkeitswerten angepasst werden und
• in einem dritten Schritt das Kriterium (7) mit einer oder mehreren der Schwellen (8', 8") verglichen wird, wobei die Entscheidung zum Zünden des Insassenschutzmittels abhängig vom Vergleichsergebnis getroffen wird.

2. Verfahren nach Anspruch 1, **dadurch gekennzeichnet, daß** der Zugehörigkeitswert eine Vielzahl von Zwischenwerten zwischen 0 % und 100 % annehmen kann.

3. Verfahren nach einem der Ansprüche 1 oder 2, **dadurch gekennzeichnet, daß** abhängig von dem oder den ermittelten Zugehörigkeitswerten Gewichtungsfaktoren gebildet werden, mit de nen im Auslösealgorithmus enthaltene Vorgabewerte für die Berechnung des Kriteriums und/oder einer oder mehrerer Schwellen gewichtet werden.

4. Verfahren nach einem der vorhergehenden Ansprüche, **dadurch gekennzeichnet, daß** der Unfallsensor ein zentraler Beschleunigungssensor ist, dessen Ausgangssignal von dem Steuergerät nicht nur zur Klassifizierung der Unfallart, sondern auch zur Bildung eines Kriteriums und einer Schwelle oder mehrere Schwellen ausgewertet wird.

5. Verfahren nach einem der vorhergehenden Ansprüche, **dadurch gekennzeichnet, daß** zusätzlich zu einem zentralen Sensor ein ausgelagerter Sensor vorhanden ist, dessen Ausgangssignal von dem Steuergerät nicht nur zur Klassifizierung der Unfallart, sondern auch zur Bildung eines Kriteriums und einer Schwelle oder mehrere Schwellen ausgewertet wird.

## Claims

1. Method for controlling the triggering of one or more vehicle occupant protection components of a motor vehicle occupant protection system in the event of an impact, having one or more accident sensors and a control unit which evaluates the output signals of the accident sensor or sensors in accordance with a triggering algorithm in order to fire the vehicle occupant protection component/components, **characterized in that**
• in a first step of a type of impact classification section (1) of the triggering algorithm, membership values indicating the probability of membership to a type of impact and relating to at least two types of impact are formed from the output signal or signals of the accident sensor or sensors, which membership values are variable as a function of the precision of the classification of the current impact as a respective type of impact,
• in a second step, parameters of the triggering algorithm such as a criterion (7) which is dependent on the current acceleration detected and/or thresholds (8', 8") with which the criterion can be compared and/or the triggering algorithm are adapted as a function of the membership values formed, and
• in a third step, the criterion (7) is compared with one or more of the thresholds (8', 8"), the decision to fire the vehicle occupant protection means being made as a function of the result of the comparison.

2. Method according to Claim 1, **characterized in that** the membership value can assume a multiplicity of intermediate values between 0% and 100%.

3. Method according to either of Claims 1 and 2, **characterized in that** weighting factors are formed as a function of the membership value or values which are determined and are used to weight preset values, contained in the triggering algorithm, for the calculation of the criterion and/or of one or more thresholds.

4. Method according to one of the preceding claims, **characterized in that** the accident sensor is a central acceleration sensor whose output signal is evaluated by the control unit not only in order to classify the type of accident but also to form a criterion and a threshold or a plurality of thresholds.

5. Method according to one of the preceding claims, **characterized in that**, in addition to a central sensor, there is an exported sensor whose output signal is evaluated by the control unit not only in order to classify the type of accident but also in order to form a criterion and a threshold or a plurality of thresholds.

## Revendications

1. Procédé pour la commande du déclenchement d'un ou de plusieurs composant(s) de protection des occupants appartenant à un système de protection des occupants d'un véhicule automobile en présence d'une collision, qui utilise un ou plusieurs capteur(s) d'accident et un appareil de commande pour l'allumage du ou des composant(s) de protection des occupants, qui interprète les signaux de sortie du ou des capteur(s) d'accident en appliquant un algorithme de déclenchement,
**caractérisé en ce que**
• dans une première phase, un segment (1) de classification du type de collision de l'algorithme de déclenchement forme, à partir du ou des signaux de sortie du ou des capteur(s) d'accident, des valeurs d'appartenance, qui indiquent la probabilité de l'appartenance à un type de collision, à au moins deux types de collisions, les valeurs d'appartenance étant variables en fonction de la précision de la classification de la collision actuelle dans un certain type de collision,
• dans une deuxième phase, des paramètres de l'algorithme de déclenchement tels qu'un critère (7) qui est fonction de l'accélération actuelle captée et/ou de seuils (8', 8") avec lesquels cette dernière peut être comparée et/ou l'algorithme de déclenchement sont adaptés en fonction des valeurs d'appartenance formées, et
• dans une troisième phase, le critère (7) est comparé à un ou plusieurs des seuils (8', 8"), la décision pour l'allumage du moyen de protection des occupants étant prise en fonction du résultat de la comparaison.

2. Procédé selon la revendication 1, **caractérisé en ce que** la valeur d'appartenance peut prendre une pluralité de valeurs intermédiaires entre 0 % et 100 %.

3. Procédé selon une des revendications 1 ou 2, **caractérisé en ce qu'**en fonction de la ou des valeur(s) d'appartenance obtenue(s), on forme des facteurs de pondération avec lesquels des valeurs prédéterminées contenues dans l'algorithme de déclenchement sont pondérées pour le calcul du critère et/ou d'un ou de plusieurs seuil(s).

4. Procédé selon une des revendications précédentes, **caractérisé en ce que** le capteur d'accident est un capteur d'accélération central dont le signal de sortie est interprété par l'appareil de commande, non seulement pour la classification du type d'accident mais aussi pour la formation d'un critère et d'un seuil ou de plusieurs seuils.

5. Procédé selon une des revendications précédentes, **caractérisé en ce qu'**en supplément d'un capteur central, est présent un capteur espacé dont le signal de sortie est interprété par l'appareil de commande, non seulement pour la classification du type d'accident mais aussi pour la formation d'un critère et d'un seuil ou de plusieurs seuils.
